# EUROPEAN PATENT APPLICATION

(11) **EP 1 110 656 A1**
(43) Date of publication of application: **27.06.2001**
(21) Application number: 99124775.0
(22) Date of filing: 14.12.1999
(51) Int. Cl.: B23K 11/00

(54) **A machine for manufacturing electro-welded metal reinforcements**

(71) Applicant: Beta Systems S.r.L., 33030 Buia (Udine) (IT)
(72) Inventor: Celotti, Marco, 33030 Buia (Udine) (IT); Taboga, Ermanno, 33030 Buia (Udine) (IT)
(74) Representative: Gotra, Stefano

(57) **Abstract**

The machine comprises a welding station (2) provided with a row of welders (3), each of which can weld two bars arranged transversally one to the other. The longitudinal bars (L), arranged side-by-side in an advancement direction (G) which is transversal to the row of welders (3), are fed to the welding station (2). The transversal bars (T) are arranged transversally to the longitudinal bars (L) and fed to the welding station (2). Each welder (3) can on command be laterally displaced in a transversal direction (F) to an advancement direction (G) of the longitudinal bars (L). With the machine, electrowelded metal reinforcements having special conformations can be manufactured rapidly, easily and economically.

## Description

The invention relates especially to a machine comprising a welding station, which in turn comprises a line of welding devices, each of which welds two metal bars (normally iron rods) at their meeting point - the rods being crisscrossed, one transversally to another. A plurality of longitudinal bars is fed to the welding station, with the bars arranged side-by-side in a transversal advancement direction to the line of welding devices; each advancing bar is then associated to a respective welding device. A plurality of transversal bars is then fed to the welding station so that each transversal bar can be welded to the longitudinal bars by the welding devices.

A machine of this type is taught in the prior art, which manufactures metal grids of a relatively simple and regular conformation. However, especially with regard to the manufacture of concrete reinforcements, sometimes special conformations of reinforcements are needed, for example conformations which leave a space for a future window or other opening, or reinforcements where the distance between the bars is not constant, but where in some parts the longitudinal or transversal bars are arranged closer together than in the rest of the piece. Prior art applications are relatively slow and unwieldy in this more irregular type of manufacture, mostly because laborious positioning operations are needed to position the bars correctly for welding. Also awkward are the necessary cutting operations on some of the bars so that spaces can be obtained for the aforementioned windows and other openings.

A further inconvenience in known machines is they are not suited to production of electrowelded reinforcements having bars of varying diameters.

A further drawback is that the prior art machines are predisposed to weld the transversal bars on one side only of the longitudinal bars. In the manufacture of concrete reinforcements, it is often necessary to have some transversal bars welded on one side of the longitudinal bars, and others welded on the other side. In known machines this can only be achieved by a laborious and complicated operation involving turning the partially-completed reinforcement over.

The main aim of the present invention is to obviate the above-mentioned limitations in the prior art by providing a machine, of the above-mentioned type, which is able to manufacture specially-conformed electrowelded reinforcements relatively quickly and easily.

An advantage of the invention is that it provides a machine which is able to manufacture relatively simply and quickly an electrowelded reinforcement having transversal bars which are welded on both sides of the grid, but without there being any need to turn the grid over or tilt it in order to achieve the result. A further advantage of the invention is to provide a machine which can manufacture simply and rapidly reinforcements wherein the distance between the longitudinal bars (and the transversal bars) can be varied from one bar to a next.

A further advantage of the invention is that it enables longitudinal bars situated very closely one to another to be welded.

A still further advantage is that a special reinforcement consisting of bars having different diameters can be rapidly and economically produced.

Further characteristics and advantages of the present invention will better emerge from the detailed description that follows of a preferred but nonexclusive embodiment of the invention, illustrated purely by way of nonlimiting example in the accompanying figures of the drawings, in which:
figure 1 is a diagram of a machine made according to the invention, in a plan view seen from above;
figure 2 is a schematic lateral view in vertical elevation of a detail of the
machine of figure 1;
figure 3 is an enlarged-scale lateral view from the right of figure 2.

With reference to the above-mentioned figures of the drawings, 1 denotes in its entirety a machine for manufacturing electro-welded metal reinforcements.

The machine 1 comprises a welding station 2 provided with a line of welders 3, each of which can weld two reciprocally-transversally-arranged bars. The welders 3 can on command be displaced in direction F, i.e. parallel to the line of welders themselves. The welders might be arranged such that they form a group which can be moved en masse in direction F, or can be independently controlled so that each separate welder 3 can on command move closer to or further from a next welder in the group.

The machine 1 comprises first means for feeding, predisposed for supplying the welding station 2 with a plurality of longitudinal bars L arranged side-by-side to each other in an advancement direction G which is transversal to the line of welders 3, and also comprises second means for feeding, predisposed such as to supply the welding station 2 with a plurality of transversal bars T arranged transversally to the longitudinal bars L and weldable thereto by means of the welders 3. The advancement direction G of the longitudinal bars L is perpendicular to the direction F of the lateral displacements of the various welders 3. The first and second means for feeding, which are of known type, might comprise one or more spools 4 from which metal bars or rods are continuously dispensed and directed to a cutter 5 which is commanded to shear the bars into variable lengths.

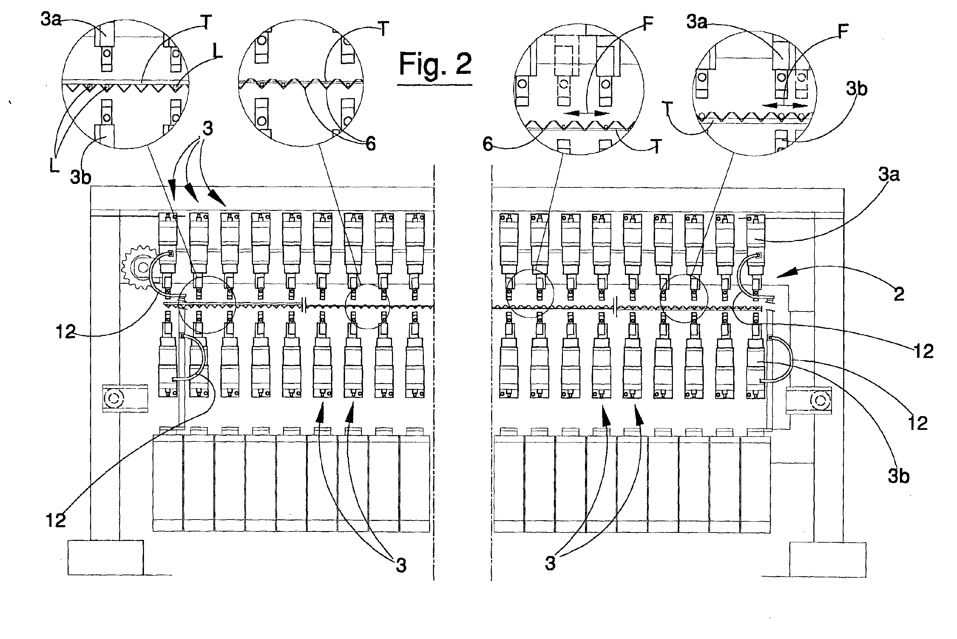

Each welder 3 comprises a pair of welding electrode heads 3a and 3b, set opposite one another, one being above and the other below the bars to be welded. The heads 3a and 3b can be distanced and neared to each other in a vertical direction H, so that they can operate contactingly with the bars to be welded. Each welding head, which comprises at least a welding electrode, is connected to the electricity supply through a flexible cable 12 set upstream of the infeeding zone of the transversal bars T to the welding station 2. For reasons of greater clarity, in figure 2 only a small part of the flexible cables 12 has been drawn in. Each welding head is equipped with at least one position sensor for identifying the weld point where a longitudinal bar L crosses with a transversal bar T. Furthermore, each welding head comprises a pressor to generate a predetermined weld pressure on the bars to be welded.

Each welder 3 is associated with a means for managing overall device functioning, operating independently of similar means for managing the other welders 3. The means for managing the welders 3 are connected to a central managing unit. Each means for managing a single welder 3 is connected up to the central managing unit independently of the other means for managing the other welders. Each means for managing is predisposed especially to enable the welder 3 it supplies to function with a variously-adjustable electric welding current, different from the current supplied to the other welders 3. Furthermore, the central managing unit can activate only a certain number of welders 3, even one alone, leaving the others deactivated. In this particular embodiment each flexible cable 12 predisposed to supply one mobile welding head has a mobile end connected to the head and an opposite fixed end connected up to the central managing unit.

The machine 1 comprises a plurality of guides 6, parallel and side-by-side, each of which is predisposed to direct the advancement of a longitudinal bar L to the welding station 2. The means for advancing the bars L along the guides 6 are of known type and not illustrated. Each guide 6, which comprises a V-shaped channel for receiving a longitudinal bar L, follows a straight path to guide the bar L. The guides for the bars L lie along a horizontal advancement plane. The guides 6 are situated at a reciprocal constant distance which is lower than the average distance between the welders 3. Preferably the above-mentioned distance is a submultiple of the average distance between the welders 3. In the present embodiment the distance between two adjacent guides 6 is about a quarter of the distance between two adjacent welding devices, as is evidenced in the enlarged details in figure 2.

The second means for feeding, supplying the transversal bars T, comprise at least one rest 7, for supporting a transversal bar T in a horizontal position, which rest 7 can on command selectively assume a first position, in which the bar can be welded below the longitudinal bars L, and a second position, in which a transversal bar T destined for welding can be received while not in the welding position.

The rest 7 comprises a hollow seating, superiorly open to receive a bar, predisposed at an upper end of at least one inclined arm 8, mobile and activated by a hydraulic cylinder to move in the direction of its own inclined longitudinal axis. A slide 9 is predisposed to guide a transversal bar T towards the hollow seating of the rest 7 in the receiving position. In figure 3 the arm 8 is illustrated with a continuous line in the second position, in which it receives a transversal bar T, and with a broken line in the first position in which it supports a transversal bar T during welding. In the second position the arm 8 and the relative upper rest 7 are lower than the welding zone and laterally displaced with respect thereto.

The second means for feeding comprise a slide 10, above the other slide 9, which guides a transversal bar T into a welding position in which it can be welded above the longitudinal bars L. The slide 10 is arranged above the welding zone, with its lower end situated close thereto.

A small table 11 is arranged between the heads 3a and 3b for supporting a transversal bar T in the welding position for welding to a longitudinal bar L.

The table 11 is usable for welding transversal bars T both above and below longitudinal bars L.

During operation, each longitudinal bar L is associated to a welder 3, while each transversal bar T is associated to the line of welders 3. After a transversal bar T has been welded to a longitudinal bar L, the longitudinal bars L are moved forward together in direction G, by a step which is equal to the length of a link unit of the reinforcement under construction. Thus a new transversal bar T can be positioned with respect to the longitudinal bar L and welded thereto. This operation is repeated up until the reinforcement is completed.

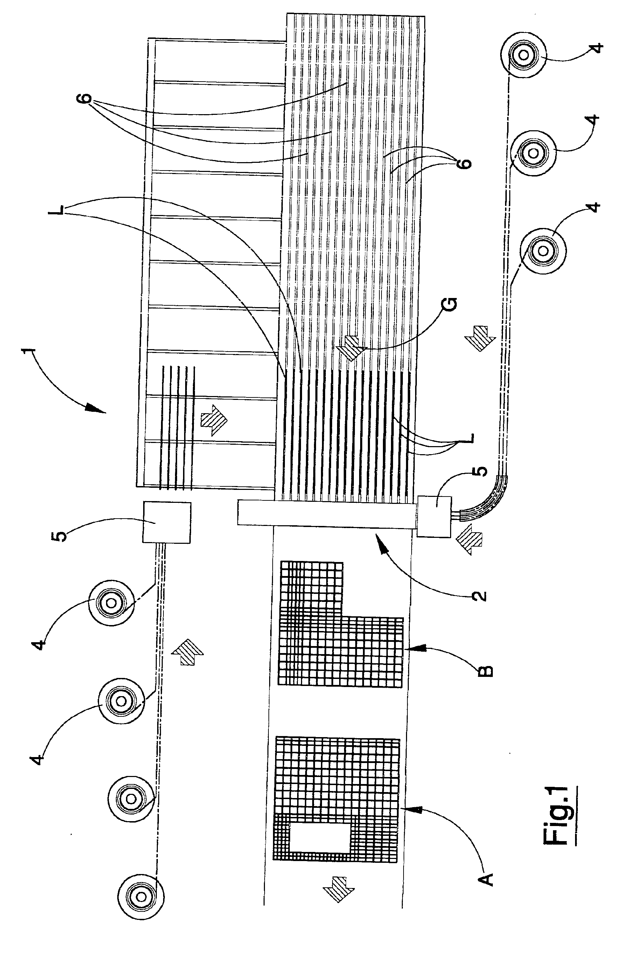

The details of figure 2 illustrate sections of longitudinal bars L arranged at a step distance which is less than the distance between the welders 3. In order to weld these bars the nearest welder first welds one of the bars and then is laterally displaced so as to be able to weld the other. In some of the details of figure 2 a broken line indicates a welder which has been laterally displaced in order to associate with a longitudinal bar L closest to a just-welded bar. This ability to laterally displace a welder 3 means that special reinforcements such as those denoted by A and B in figure 1 can easily and quickly be produced. A and B in fact show reinforcements where one or more welded bars are very close to other bars, thus obtaining zones where bars are much more closely arranged than in other zones.

The machine can correctly weld together bars of varying diameters, as shown in the details of figure 2. This can be achieved thanks to the fact that each welder is supplied adjustably and independently of the others, with the result that each welder 3 can operate contemporaneously with the others but at a different welding current, i.e. a current which is specific for the weld being performed at the time. Thus a reinforcement composed of various-diameter bars can be manufactured.

Specially-shaped reinforcements such as A and B, for example with special window spaces, can be directly manufactured with the machine of the invention, without the need for subsequent cutting operations. For this purpose the cutting devices 5, controlled in known ways, are programmed to cut a predetermined number of bars, both transversal and longitudinal, to predetermined lengths. Subsequently the bars are positioned so as to form, while still on the machine, a grid of the desired special shape. When the bars pass through the welding station 2, the welders 3 located at the cross-points between the bars are activated and supplied with the proper current necessary, while the welders 3 located where there are at present no bars, or where there is no joint cross-over between bars, are left inactive. The central managing unit selects the welders on the basis of a pre-set work program.

A further advantage of the machine is that selective welding of the transversal bars T is possible, above or below the longitudinal bars L. For welding above, the transversal bar T is fed to the upper slide 10, appropriately positioned with respect to the longitudinal bar L, and is then allowed to drop along the slide 10. The transversal bar T falls down to rest on the table 11 in the correct welding position. For welding below the longitudinal bar, the transversal bar T is fed to the lower slide 9, and is allowed to drop along the slide 9 and is transferred onto the concave rest 7 located at the upper end of the arm 8 or arms, in the receiving position. The arm 8 is then raised so as to bring the transversal bar T into the welding zone. After a bar has been welded, the arm 8 returns back down into the receiving position (ready for another bar).

The machine of the invention enables the manufacture in one coordinated operation of a reinforcement having some transversal bars welded above the longitudinal bars and others welded below.

## Claims

1. A machine for manufacturing electro-welded metal reinforcements, comprising:
a welding station (2) provided with a row of welders (3), each of which welders (3) can weld two bars, a longitudinal bar (L) and a transversal bar (T) arranged transversally one to the other;
means for feeding a plurality of longitudinal bars (L) to the welding station (2), the longitudinal bars (L) being arranged side-by-side in an advancement direction (G) which is transversal to the row of welders (3), each longitudinal bar (L) being associated to a respective welder (3);
means for feeding a plurality of transversal bars (T) to the welding station (2), the transversal bars (T) being arranged transversally to the longitudinal bars (L) and being weldable thereto by means of the welders (3);
characterised in that the means for feeding the transversal bars (T) comprises means for supporting a transversal bar (T) in a horizontal position, which means for supporting can on command selectively assume a first position, in which a transversal bar (T) can be supported in a welding position in which the transversal bar (T) can be welded below the longitudinal bars (L), and a second position, in which a transversal bar (T), destined for welding, can be received in a position in which the transversal bar (T) is distant from the welding position.

2. The machine of claim 1, characterised in that the means for supporting a transversal bar (T) comprise at least one mobile rest (7).

3. The machine of claim 2, characterised in that the mobile rest (7) comprises a hollow seating, superiorly open in order to receive a transversal bar (T), predisposed at an upper end of at least one arm (8) which is mobile on command.

4. The machine of claim 3, characterised in that it comprises a slide (9) for guiding a transversal bar (T) towards the hollow seating and into the position for receiving.

5. The machine of any one of the preceding claims, characterised in that it comprises means for positioning a transversal bar (T) to be welded above the longitudinal bars (L).

6. The machine of claim 5, characterised in that the means for positioning comprise a slide (10) for guiding a transversal bar (T) into a welding position in which the transversal bar (T) can be welded above the longitudinal bars (L).

7. The machine of any one of the preceding claims, characterised in that it comprises a table (11) on which a transversal bar (T) is supported when located in the welding position in which the transversal bar (T) can be welded above or below the longitudinal bars (L).

8. The machine for manufacturing electro-welded metal reinforcements of any one of the preceding claims, comprising:
a welding station (2) provided with a row of welders (3), each of which welders (3) can weld two bars, a longitudinal bar (L) and a transversal bar (T) arranged transversally one to the other;
means for feeding a plurality of longitudinal bars (L) to the welding station (2), the longitudinal bars (L) being arranged side-by-side in an advancement direction (G) which is transversal to the row of welders (3), each longitudinal bar (L) being associated to a respective welder (3);
means for feeding a plurality of transversal bars (T) to the welding station (2), the transversal bars (T) being arranged transversally to the longitudinal bars (L) and being weldable thereto by means of the welders (3);
characterised in that it comprises, associated to each welder (3), means for controlling operation of the welder (3) able to operate independently of the means for controlling other welders (3).

9. The machine of claim 8, characterised in that the means for controlling the welders (3) are connected to a central managing unit.

10. A machine for manufacturing electro-welded metal reinforcements, according to any one of the preceding claims, comprising:
a welding station (2) provided with a row of welders (3), each of which welders (3) can weld two bars, a longitudinal bar (L) and a transversal bar (T) arranged transversally one to the other;
means for feeding a plurality of longitudinal bars (L) to the welding station (2), the longitudinal bars (L) being arranged side-by-side in an advancement direction (G) which is transversal to the row of welders (3), each longitudinal bar (L) being associated to a respective welder (3);
means for feeding a plurality of transversal bars (T) to the welding station (2),
the transversal bars (T) being arranged transversally to the longitudinal bars (L) and being weldable thereto by means of the welders (3);
characterised in that each welder (3) can on command be laterally displaced in a transversal direction (F) to an advancement direction (G) of the longitudinal bars (L).

11. The machine of any one of the preceding claims, characterised in that it comprises a plurality of guides (6), arranged parallel and side-by-side, each of which directs an advancement of a longitudinal bar (L) to the welding station (2); the guides are located at a distance one from another which is smaller than an average distance between welders (3).

12. An electro-welded metal reinforcement (A, B) manufactured using a machine (1) according to any one of the preceding claims, comprising a plurality of longitudinal bars (L) and transversal bars (T) welded to each other, at least a part of the transversal bars (T) being welded on one side of the longitudinal bars (L) and at least a part of the transversal bars (T) being welded on an opposite side of the longitudinal bars (L); at least a part of the transversal and longitudinal bars (L, T) exhibiting a different diameter to diameters of other transversal and longitudinal bars.
